# EUROPEAN PATENT APPLICATION

(11) **EP 4 835 137 A1**
(43) Date of publication of application: **04.11.2026**
(21) Application number: 25172801.0
(22) Date of filing: 28.04.2025
(51) Int. Cl.: C25B 1/04, C25B 9/67, C25B 9/77, C25B 11/02, C25B 15/021, C25B 15/08, F28D 9/00, F28F 3/00, C25B 11/03

(54) **PLATE ASSEMBLY**

(71) Applicant: Alfa Laval Corporate AB, 221 00 Lund (SE)
(72) Inventor: ÅSTRAND, Tobias, 221 00 LUND (SE); SANDGREN, Martin, 221 00 LUND (SE); STÅLBRAND, Erik, 221 00 LUND (SE)
(74) Representative: Alfa Laval Attorneys

(57) **Abstract**

A plate assembly (5) including a heat transfer plate (7) is provided. The heat transfer plate (7) is corrugated, has opposing front and back sides (11, 13), first, third and fifth portholes (25, 27, 29) arranged within a first end portion (19), and second and fourth portholes (33, 35) arranged within a second end portion (23). The plate assembly (5) is characterized in that it further comprises an electrode device (9) having opposing front and back sides (15, 17), a non-solid center portion (89) and an outer portion (93) arranged outside the center portion (89) as seen from a center of the electrode device (9). More than half of the outer portion is solid. The front side (11) of the heat transfer plate (7) abuts the back side (17) of the electrode device (9). The first, third and fifth portholes (25, 27, 29) are arranged on one side of an imaginary first straight line (L1) while the electrode device (9) is arranged on another side of said imaginary first straight line (L1). The second and fourth portholes (33, 35) are arranged on one side of an imaginary second straight line (L2) while the electrode device (9) is arranged on another side of said imaginary second straight line (L2). The lines (L1, L2) extend perpendicular to said longitudinal center axis (LHT).

## Description

### Technical Field

The invention relates to a plate assembly. The plate assembly may be comprised in an apparatus used for a heat generating process, such as electrolysis.

### Background Art

Electrolysis is a well known process of using electricity to chemically decompose an electrolyte. For example, electrolysis can be used to split water contained in an electrolyte into hydrogen and oxygen. During electrolysis, heat may be generated, which heat may have to be diverted for maintained electrolysis efficiency.

WO2024133652 discloses an apparatus used for producing hydrogen through alkaline water electrolysis. The apparatus comprises a plurality of aligned heat transfer plates serving as electrodes and defining, together with gasket arrangements and sealing arrangement positioned between the heat transfer plates, alternately arranged electrolysis channels and cooling channels. Even though this apparatus functions properly and produces the required amount of hydrogen, there is still room for improvement of the performance of the apparatus.

### Summary

An object of the present invention is to provide a plate assembly so as to enable realization of a more efficient hydrogen producing apparatus comprising said plate assembly. The basic concept of the invention is to offer a plate assembly that enables an apparatus with a close and even distance between electrodes which may result in an increased production of hydrogen and increased robustness as regards sealing and manufacturing.

Thus, the plate assembly according to the invention may be used in an apparatus for production of hydrogen.

Since the plate assembly according to the invention is not arranged for use on its own, but as a component of an apparatus as described above, the advantages of different features and embodiments of the plate assembly appear first when the plate assembly is installed in the apparatus.

A plate assembly according to the invention includes a heat transfer plate which is corrugated, has opposing front and back sides and comprises a first end portion, an intermediate portion and a second end portion arranged in succession along a longitudinal center axis of the heat transfer plate. The heat transfer plate further comprises first, third and fifth portholes arranged within the first end portion, second and fourth portholes arranged within the second end portion, and a heat transfer area provided with a heat transfer corrugation pattern arranged within the intermediate portion. The plate assembly is characterized in that it further comprises an electrode device. The electrode device has opposing front and back sides, a non-solid center portion and an outer portion arranged outside the center portion as seen from a center of the electrode device. More than half of the outer portion is solid. The front side of the heat transfer plate abuts the back side of the electrode device. Further, the electrode device covers an engagement portion of the heat transfer plate. The first, third and fifth portholes of the heat transfer plate are arranged on one side only of an imaginary first straight line extending perpendicular to the longitudinal center axis of the heat transfer plate, while the electrode device is arranged on another side only of this imaginary first straight line. Further, the second and fourth portholes of the heat transfer plate are arranged on one side only of an imaginary second straight line extending perpendicular to the longitudinal center axis of the heat transfer plate, while the electrode device is arranged on another side only of this imaginary second straight line.

The electrode device may have any suitable shape, such as a rectangular shape or an essentially rectangular shape with a pair of opposing sides bulging away from each other. The design of the electrode device is typically adapted to the design of the heat transfer plate. The electrode device may be formed as a plate.

The center portion and the outer portion of the electrode device may be separately or integrally formed. If they are separately formed, they may, or may not, be attached to each other.

By non-solid is here meant containing spaces or gaps. For example, the non-solid center portion may be a perforated center portion of the electrode device, a mesh, a net, a grid, a foam or similar.

By solid is here meant not containing spaces or gaps, i.e. consisting of the same substance throughout. For example, the at least predominantly solid outer portion may be a non-perforated outer portion of the electrode device. The outer portion of the electrode device may be continuous or intermittent. For example, an intermittent outer portion may extend on two opposite sides only of the non-solid center portion of the electrode device.

As said above, more than half of the outer portion of the electrode device is solid which means that it is predominantly or mainly solid, i.e. solid across or over more than half of its extension. The complete outer portion may be solid, i.e. the outer portion may be solid across its complete extension.

In that the front side of the heat transfer plate abuts the back side of the electrode device, and in that the electrode device covers an engagement portion of the heat transfer plate, the front side of the heat transfer plate is, within the engagement portion of the heat transfer plate, in contact with the back side of the electrode device. Typically, the heat transfer plate and the electrode device contact each other within discrete contact areas and, thus, not across or over the complete engagement portion of the heat transfer plate and the complete electrode device.

In that the plate assembly comprises an electrode device in addition to the heat transfer plate, the distance between electrodes in an apparatus comprising the plate assembly may be relatively even and small which may enable an increased production of hydrogen in the apparatus. It should be stressed that all parts of the electrode device, for example the outer portion of it, may contribute less, or not at all, to the increased production of hydrogen in the apparatus but instead may provide other effects.

In that the electrode device comprises a predominantly solid outer portion it may be used to separate and control flows inside the apparatus comprising the plate assembly, as will be described further below. The at least predominantly solid outer portion of the electrode device may also aid in maintaining in place other components of the apparatus comprising the plate assembly, such as a front gasket arrangement which will be further discussed below.

As expressed differently above, the electrode device extends between the imaginary first and second straight lines, i.e. between the portholes within the first end portion, and the portholes within the second end portion, of the heat transfer plate. Thus, the electrode device is smaller than the heat transfer plate in that at least an extension of the heat transfer plate along the longitudinal center axis of the heat transfer plate exceeds an extension of the electrode device along the longitudinal center axis of the heat transfer plate. Since the electrode device extends within the portholes of the heat transfer plate, it doesn't have to comprise portholes for feeding fluids past the electrode device. A smaller electrode device without portholes enables relatively robust and mechanically straight-forward sealing solutions in the apparatus comprising the plate assembly.

The center portion of the electrode device may cover at least part of the heat transfer area of the heat transfer plate.

Just like the complete electrode device, the center portion and the outer portion of the electrode device may have any suitable design. As an example, the outer portion of the electrode device may at least partly encircle the center portion of the electrode device. This may provide for a stable engagement between the heat transfer plate and the electrode device and enable controlled flows around the electrode device inside the apparatus comprising the plate assembly.

For example, the outer portion of the electrode device may be annular and surround, i.e. completely encircle, the center portion of the electrode device. This may provide for an optimized engagement between the heat transfer plate and the electrode device and enable optimized flows around the electrode device inside the apparatus comprising the plate assembly.

The plate assembly may be so constructed that the heat transfer plate further comprises a HT front gasket groove, a first transfer hole arranged within a first half of the heat transfer plate comprising the first end portion, and a second transfer hole arranged within a second half of the heat transfer plate comprising the second end portion. The HT front gasket groove may extend on the front side of the heat transfer plate. It may comprise an annular field portion enclosing the heat transfer area, the first transfer hole and the second transfer hole. The first, second, third, fourth and fifth portholes may be arranged outside the field portion of the HT front gasket groove. The electrode device may be arranged within the HT front gasket groove of the heat transfer plate. In other words, the HT front gasket groove may surround or encircle the electrode device.

It should be stressed that "annular" not necessarily is circular but may be any "closed" shape, such as oval, polygonal and any combination thereof. Similarly, "ring" does not necessarily mean circular but may mean any "closed" shape, such as oval, polygonal and any combination thereof.

The HT front gasket groove may be arranged to receive a gasket configured to seal between the plate assembly, or, more particularly, the heat transfer plate of the plate assembly, and an adjacent plate assembly, or, more particularly, the heat transfer plate of the adjacent plate assembly, which adjacent plate assembly is arranged on the front side of the heat transfer plate.

The first and second halves of the heat transfer plate are arranged on opposite sides of a transverse center axis of the heat transfer plate.

The plate assembly may be such that the electrode device, and possibly the outer portion thereof, covers the first and second transfer holes of the heat transfer plate. This design means that the first and second transfer holes are arranged within the engagement portion of the heat transfer plate. Such a design may facilitate the creation of the desired flows inside the apparatus comprising the plate assembly, as will be described in greater detail below.

The electrode device of the plate assembly may further comprise an electrode device gasket groove extending on the front side of the electrode device. The electrode device gasket groove may be arranged to receive a gasket configured engage with a membrane arranged to extend between the plate assembly and an adjacent plate assembly, as will be further elaborated on below.

One or more of the center portion, the outer portion and the electrode device gasket groove of the electrode device may be separately formed. Separately formed, components of the electrode device may, or may not, be attached to each other. Further, one or more of the center portion, the outer portion and the electrode device gasket groove of the electrode device may be integrally formed.

The electrode device gasket groove of the electrode device may extend between the center portion and the outer portion of the electrode device so as to seal off the non-solid part of the electrode device.

The electrode device gasket groove may have any suitable shape. As an example, the electrode device gasket groove may be annular and surround the center portion of the electrode device so as to completely seal off the non-solid part of the electrode device.

First and second extreme planes extending parallel to a central extension plane of the heat transfer plate may define an extension of the heat transfer plate. Further, fifth and fourth extreme planes extending parallel to the central extension plane of the heat transfer plate may define an extension of the heat transfer plate within the engagement portion. The fifth extreme plane may extend between the first extreme plane and the second extreme plane as well as the fourth extreme plane.

Thus, the first and second extreme planes define a maximum extension, in a thickness direction, of the complete heat transfer plate. Similarly, the fifth and fourth extreme planes define the maximum extension, in the thickness direction, of the heat transfer plate within the engagement portion of it. Typically, the locations of the first, second, fifth and fourth extreme planes are determined by the pressing depth of the corrugation patterns within different portions of the heat transfer plate. In that the fifth extreme plane extends below the first extreme plane, the engagement portion of the heat transfer plate forms a recess in the heat transfer plate. This recess may be arranged to accommodate the electrode device such that it projects less, or possibly not at all, beyond the first extreme plane.

The first, second, fifth and fourth extreme planes are imaginary.

The second and fourth extreme planes may or may not coincide.

The plate assembly may be such that the outer portion of the electrode device extends, at least partly, in the first extreme plane.

The plate assembly may be such that the center portion of the electrode device extends in an eighth extreme plane, the eighth and second extreme planes extending on opposite sides of the first extreme plane.

The plate assembly may be such that the electrode device gasket groove extends in a seventh extreme plane, the seventh and eighth extreme planes extending on opposite sides of the first extreme plane.

The plate assembly may be such that an outer edge of the electrode device, along at least part of its peripheral extension, is bent towards the heat transfer plate. The outer edge of the electrode device may be sharp. By bending at least a part of it towards the heat transfer plate, i.e. away from a central extension plane of the electrode device, the risk of it damaging other more fragile components of the apparatus comprising the plate assembly, may be decreased.

The bent outer edge of the electrode device may form a "rim" of the electrode device.

The plate assembly may further be such that the heat transfer plate comprises a recess for receiving said outer edge of the electrode device. This may enable an "interlocking" between the heat transfer plate and the electrode device which, in turn, may improve their engagement and relative positioning.

The recess may be intermittent or continuous. It may for example extend on an inside of the HT front gasket groove and on an outside of the heat transfer area of the heat transfer plate.

The heat transfer plate of the plate assembly may further comprise a first distribution area which is patterned differently than the heat transfer area. The first distribution area may be arranged between the first, third and fifth portholes and the heat transfer area. At least part of the first distribution area may be arranged within the engagement portion of the heat transfer plate. If so, at least part of the first distribution area, which is provided to achieve a uniform fluid distribution across the heat transfer plate in an apparatus comprising the plate assembly, is covered by the electrode device.

The heat transfer plate of the plate assembly may further comprise a second distribution area which is patterned differently than the heat transfer area. The second distribution area may be arranged between the second and fourth portholes and the heat transfer area. At least part of the second distribution area may be arranged within the engagement portion of the heat transfer plate.

The first distribution area may comprise a first primary distribution sub area and a first secondary distribution sub area. The first primary distribution sub area may be patterned differently than the first secondary distribution sub area. The first secondary distribution sub area may be arranged between, and border on, i.e. extend directly adjacent to, the first primary distribution sub area and the heat transfer area. By providing a first distribution area comprising two differently patterned sub areas, the fluid distribution across the heat transfer plate may be optimized in an apparatus comprising the plate assembly.

The second distribution area may comprise a second primary distribution sub area and a second secondary distribution sub area. The second primary distribution sub area may be patterned differently than the second secondary distribution sub area. The second secondary distribution sub area may be arranged between the second primary distribution sub area and the heat transfer area.

The outer portion of the electrode device may cover at least part of the first primary distribution sub area, and, if provided, at least part of the second primary distribution sub area. Further, if the electrode device comprises an electrode device gasket groove, this may cover at least part of the first secondary distribution sub area, and, if provided, at least part of the second secondary distribution sub area, and possibly also part of the heat transfer area of the heat transfer plate.

The heat transfer plate may further comprise a first support area extending at least on two opposite sides of the heat transfer area. The first support area may comprise first support ridges comprising tops supporting the electrode device. Thereby, the electrode device may indirectly or directly contact or abut, and be supported by, the heat transfer plate outside the heat transfer area.

The first support area may extend on two opposite longitudinal sides of the heat transfer area, i.e. on opposite sides of the longitudinal center axis of the heat transfer plate. Alternatively/additionally, the first support area may extend on two opposite transverse sides of the heat transfer area, i.e. on opposite sides of the transverse center axis of the heat transfer plate. Thus, the first support area may be continuous or intermittent.

The tops of the first support ridges may extend in the fifth extreme plane.

The first support area may extend on the inside of the HT front gasket groove.

The outer portion of the electrode device may cover at least part of the first support area of heat transfer plate.

The heat transfer plate may further comprise a second support area extending at least on two opposite sides of the heat transfer area. The second support area may comprise second support ridges arranged outside the engagement portion of the heat transfer plate, i.e outside the electrode device. The second support ridges may comprise tops extending above the tops of the first support ridges as seen from the heat transfer plate. Thereby, inner flanks of the second support ridges may limit displacement of the electrode device.

The second support area may extend on two opposite longitudinal sides of the heat transfer area, i.e. on opposite sides of the longitudinal center axis of the heat transfer plate. Alternatively/additionally, the second support area may extend on two opposite transverse sides of the heat transfer area, i.e. on opposite sides of the transverse center axis of the heat transfer plate.

The tops of the second support ridges may extend in the first extreme plane.

The second support area may extend on the inside of the HT front gasket groove.

The second support area may extend on an outside of the first support area if such is provided.

Still other objectives, features, aspects and advantages of the invention will appear from the following detailed description as well as from the drawings.

### Brief Description of the Drawings

The invention will now be described in more detail with reference to the appended schematic drawings, in which
Figs. 1a and 1b are essentially similar perspective views schematically illustrating a part of an apparatus, which comprises plate assemblies according to the invention, in a disassembled state, and different fluid paths through the apparatus,
Fig. 2 is a schematic plan view of a front side of a plate assembly of the apparatus in Fig. 1a,
Fig. 3 is a schematic plan view of a front side of a heat transfer plate of the plate assembly in Fig. 2,
Fig. 4 is a schematic partial side view of the heat transfer plate in Fig. 3,
Fig. 5 is a schematic plan view of a part of the heat transfer plate in Fig. 3,
Fig. 6 is an enlargement of a portion of the heat transfer plate in Fig. 3,
Fig. 7a is a cross section, along a line A-A illustrated in Fig. 6, of a portion of the plate assembly in Fig. 2, Fig. 7a consisting of two sub figures of which the lower one is an enlargement of part of the upper one,
Fig. 7b is another cross section, along a line B-B illustrated in Fig. 6, of the portion in Fig. 7a, and
Fig. 8 is a schematic plan view of a part of the plate assembly in Fig. 2.

### Detailed Description

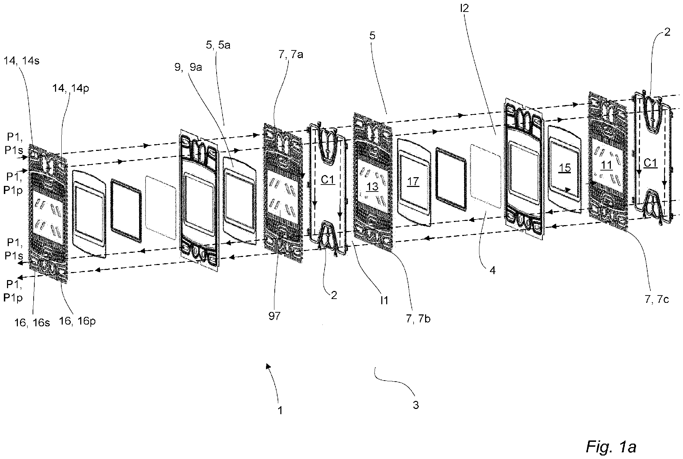

Fig. 1a illustrates a part of an apparatus 1 used for producing hydrogen through electrolysis, here alkaline water electrolysis. The apparatus 1 comprises a stack 3 (only partly illustrated) of essentially similar plate assemblies 5 which each comprises a heat transfer plate 7 and an electrode device 9 in the form of a plate. The heat transfer plates 7 each has a front side 11 and an opposing back side 13. The electrode devices 9 each has a front side 15 and a back side 17. In the plate assemblies 5, the front side 11 of the heat transfer plate 7 abuts the back side 17 of the electrode device 9. To enable the electrolysis, a current is applied to the apparatus 1 to turn the plate assemblies into electrodes, more particularly every second one of the plate assemblies 5 into anodes and the rest of the plate assemblies 5 into cathodes.

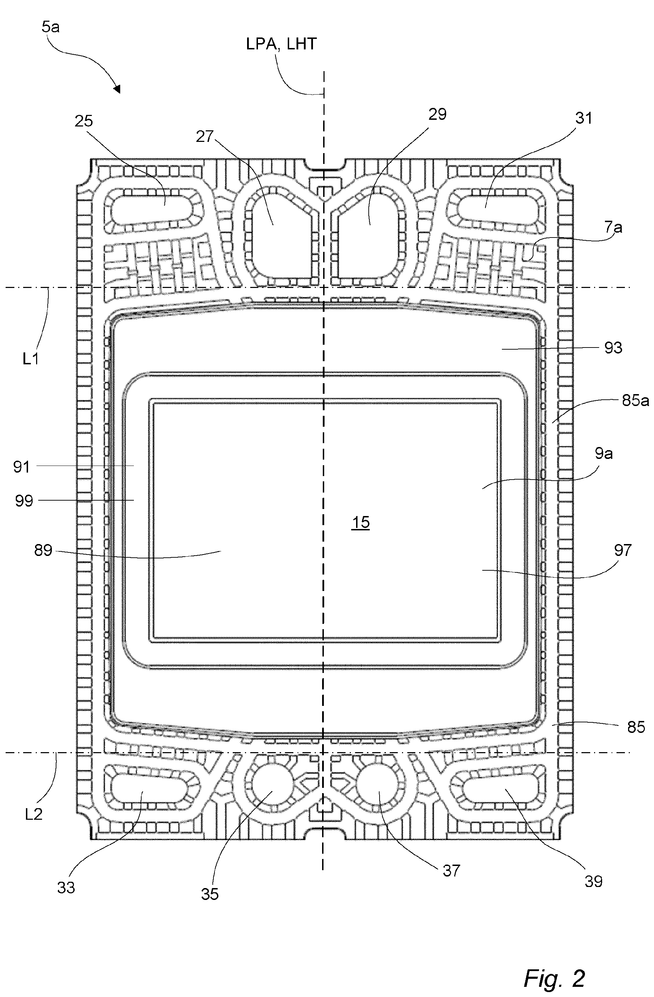

In the stack 3, the plate assemblies 5 are "turned" in relation to each other, i.e. arranged electrode device front side 15 to electrode device front side 15 and heat transfer plate back side 13 to heat transfer plate back side 13. This is achieved by rotating every second one of the plate assemblies 5 180 degrees around a respective plate assembly longitudinal center axis LPA (Fig. 2) with respect to the rest of the plate assemblies 5.

One of the plate assemblies 5, denoted 5a, the heat transfer plate of the plate assembly 5a, denoted 7a, and the electrode device of the plate assembly 5a, denoted 9a, are illustrated in further detail in Figs. 2 to 8.

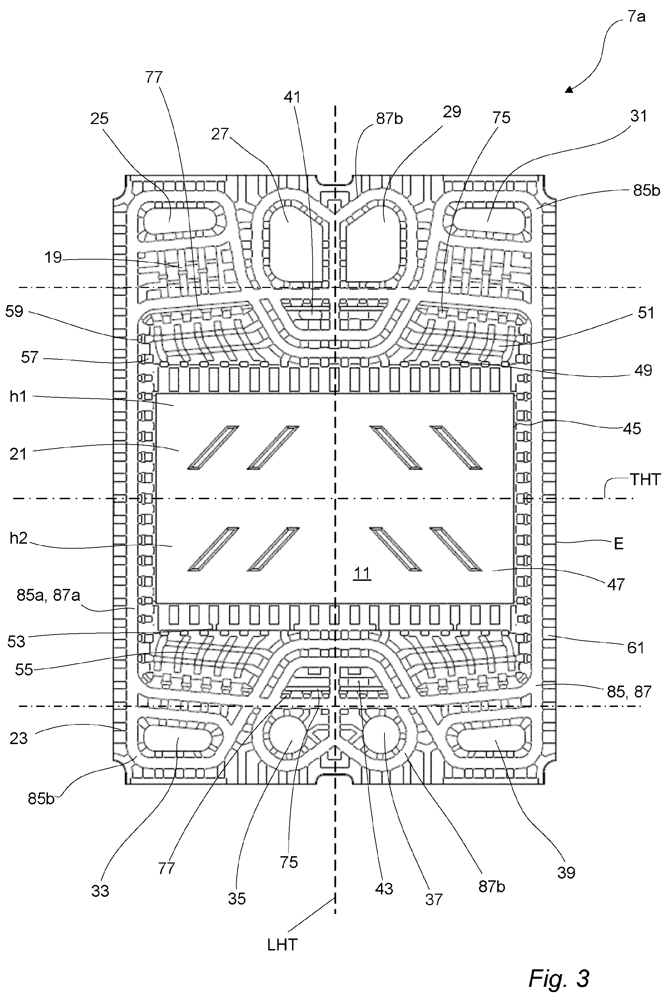

With reference to Fig. 3, the heat transfer plate 7a is formed of a sheet of stainless steel (could be other materials in other embodiments) of thickness t1 and has a first end portion 19, an intermediate portion 21 and a second end portion 23 arranged in succession along a longitudinal center axis LHT of the heat transfer plate 7a. In the plate assembly 5a, the longitudinal center axis LHT of the heat transfer plate 7a is aligned with the longitudinal center axis LPA (Fig. 2) of the plate assembly 5a. The borders between the first end portion 19, the intermediate portion 21 and the second end portion 23 are illustrated with ghost lines in Fig. 3. The first end portion 19 comprises a first porthole 25, a third porthole 27, a fifth porthole 29 and a seventh porthole 31, while the second end portion 23 comprises a second porthole 33, a fourth porthole 35, a sixth porthole 37 and an eighth porthole 39. The first, second, third and fourth portholes 25, 33, 27 and 35 are mirrorings, across the longitudinal center axis LHT of the heat transfer plate 7a, of the seventh, eighth, fifth and sixth portholes 31, 39, 29 and 37, respectively. Further, a first transfer hole 41 is arranged within a first half h1 of the heat transfer plate 7a, and a second transfer hole 43 is arranged within a second half h2 of the heat transfer plate 7a, which first half h1 and second half h2 are arranged on opposite sides of the transverse center axis THT and comprise the first end portion 19 and the second end portion 23, respectively, of the heat transfer plate 7a. As is clear from Fig. 3, the first and second transfer holes 41 and 43 are arranged within the intermediate portion 21 of the heat transfer plate 7a, on opposite sides of the longitudinal center axis LHT of the heat transfer plate 7a.

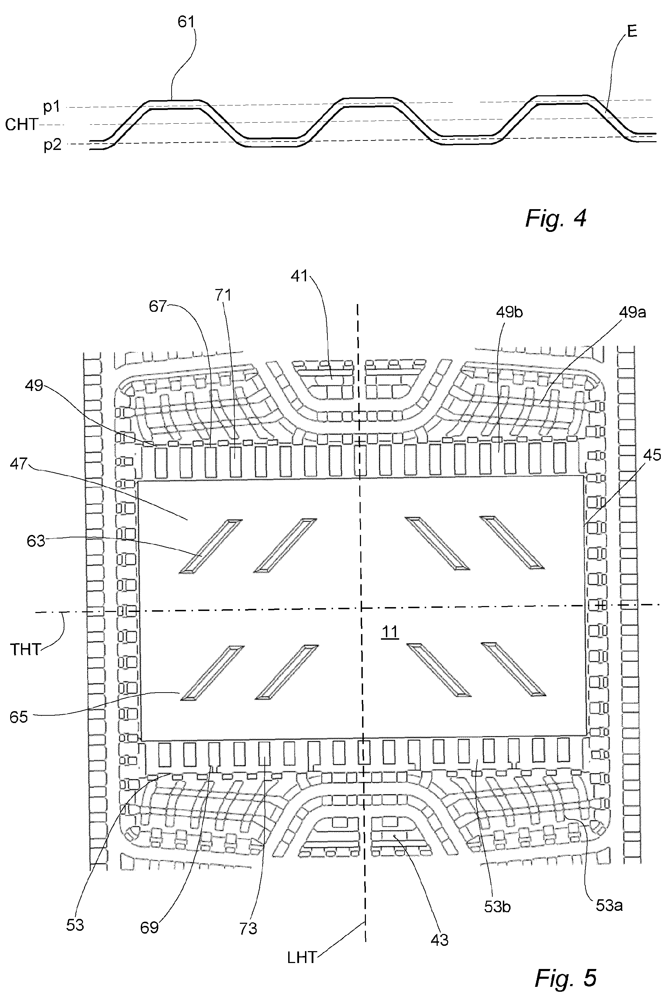

As heat transfer plates normally are, the heat transfer plate 7a is pressed with corrugation patterns of ridges and valleys in relation to a respective central extension plane CHT of the heat transfer plate 7a, which central extension plane is parallel to the figure plane of Fig. 3 and illustrated in Fig. 4. The corrugation patterns within different areas of the heat transfer plate 7a are different. More particularly, the intermediate portion 21 comprises a heat transfer area 45 which is pressed with a heat transfer corrugation pattern 47 (only schematically illustrated in Fig. 3), a first distribution area 49 which is pressed with a first distribution pattern 51 and a second distribution area 53 which is pressed with a second distribution pattern 55. The first distribution area 49 extends between the first end portion 19 and the heat transfer area 45 while the second distribution area 53 extends between the second end portion 23 and the heat transfer area 45. The intermediate portion 21 further comprises an annular first support area 57 and an annular second support area 59. The first support area 57 encircles the heat transfer area 45, the first distribution area 49 and the second distribution area 53. The second support area 59 encircles the first support area 57. An outer edge portion 61 of the heat transfer plate 7a is pressed with alternately arranged ridges and valleys extending from an outer edge E of the heat transfer plate 7a. As is illustrated in Fig. 4, the ridges and valleys of the outer edge portion 61 extends in and between parallel first and second extreme planes p1 and p2 extending parallel to the central extension plane CHT. Corrugations are also provided around the first and second transfer holes 41 and 43, as is illustrated for example in Fig. 3.

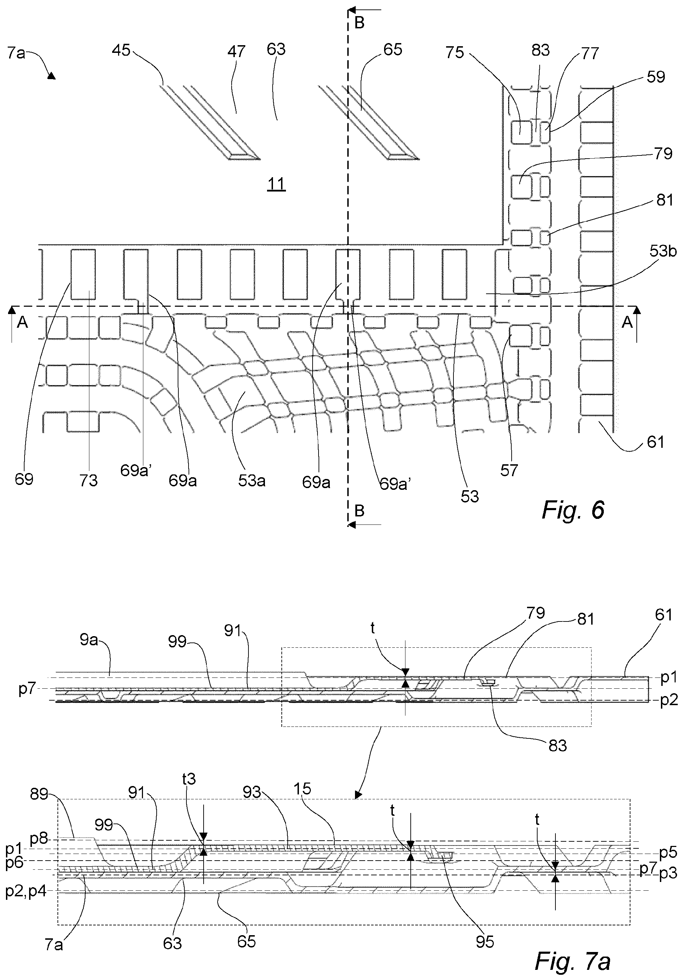

With reference to Figs. 5, 6, 7a and 7b, the heat transfer corrugation pattern 47 is of so-called herringbone type. As seen from the front side 11 of the heat transfer plate 7a, the heat transfer corrugation pattern 47 comprises alternately arranged elongate ridges 63 and valleys 65 which are inclined in relation to the longitudinal center axis LHT of the heat transfer plate 7a. The ridges 63 and the valleys 65 extend in and between parallel third and fourth extreme planes p3 and p4 (Fig. 7a). The fourth extreme plane p4 coincides with the second extreme plane p2 and the third extreme plane p3 extends between the first and fourth extreme planes p1, p4. Thus, since the third extreme plane p3 is arranged below the first extreme plane p1, the heat transfer area 45 is, at the front side 11 of the heat transfer plate 7a, "recessed" in relation to the ridges of the outer edge portion 61 of the heat transfer plate 7a.

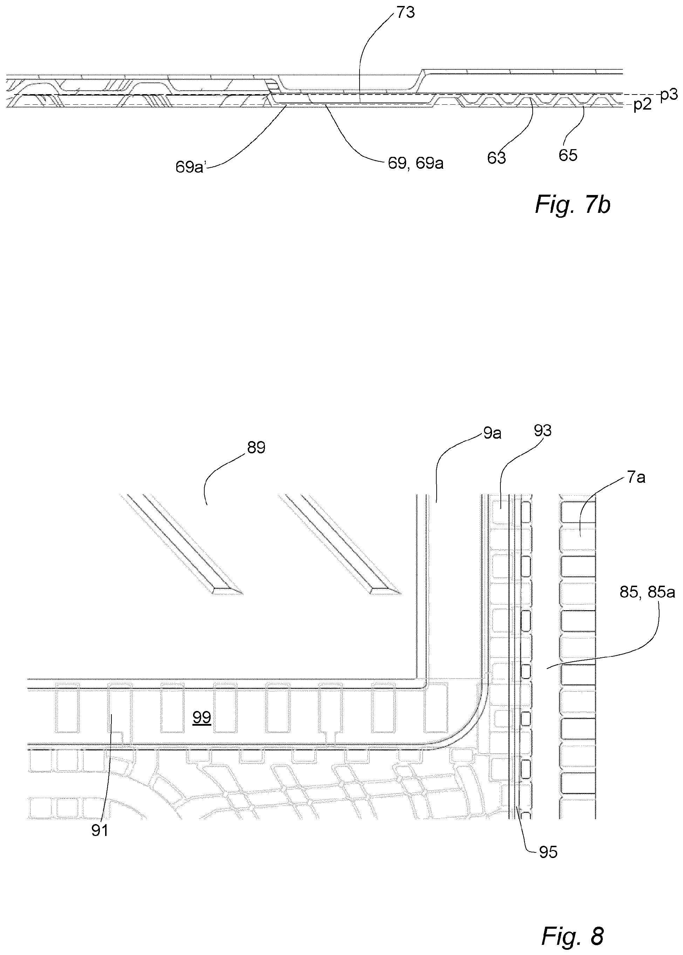

With special reference to Fig. 5, the first distribution area 49 comprises a first primary distribution sub area 49a and a first secondary distribution sub area 49b, which first secondary distribution sub area 49b extends between the first primary distribution sub area 49a and the heat transfer area 45. Similarly, the second distribution area 53 comprises a second primary distribution sub area 53a and a second secondary distribution sub area 53b, which second secondary distribution sub area 53b extends between the second primary distribution sub area 53a and the heat transfer area 45. The first and second primary distribution sub areas 49a and 53a are each provided with a pattern of so-called chocolate type. With reference also to Figs. 6, 7a and 7b, which illustrate part of the second distribution area 53, the first and second secondary distribution sub areas 49b and 53b comprises a plurality of distribution recesses 67 (Fig. 5) and 69 (Fig. 6) which are equidistantly distributed along the transverse center axis THT (Fig. 3) of the heat transfer plate 7a. A respective bottom 71 (Fig. 5) and 73 (Fig. 6) of these distribution recesses 67 and 69 extend in the second extreme plane p2 (Fig. 7b). Outside the distribution recesses 67 and 69, within the first and second secondary distribution sub areas 49b and 53b, the heat transfer plate 7a extends in the third extreme plane p3. A few of the distribution recesses in the second secondary distribution sub area 53b, the ones denoted 69a (Fig. 6), comprise a respective channel 69a' which extends towards the second primary distribution sub area 53a. The distribution recesses 67 in the first secondary distribution sub area 49b all lack corresponding channels. The function of the distribution recesses 67 and 69 and the channels 69a' of the distribution recesses 69a will be discussed below.

With reference again to Figs. 3, 6 and 7a, the first support area 57 comprises separately arranged first support ridges 75 while the second support area 59 comprises separately arranged second support ridges 77. Most of the first support ridges 75 is aligned with a respective one of the second support ridges 77. However, as can be seen in Fig. 3, at outer transverse sides of the first and second distribution areas 49, 53 (sides extending along the transverse center axis THT and closest to the portholes), some of the first support ridges 75 are elongated and extend along more than one of the second support ridges 77, and some of the second support ridges 77 are elongated and extend along more than one of the first support ridges 75. Each of the first support ridges 75 comprises a top 79 (Fig. 6) which extends in a fifth extreme plane p5 (Fig. 7a) which is arranged slightly below, on a distance t, from the first extreme plane p1, i.e. between the first and third extreme planes p1 and p3. Each of the second support ridges 77 comprises a top 81 (Fig. 6) which extends in the first extreme plane p1. Between the tops 79 and 81 of the first and second support ridges 75 and 77, the heat transfer plate 7a comprises a recess 83 (Fig. 6) which discontinuous, annular and extends between the first and second support areas 57 and 59. As is clear from Fig. 7a, a bottom of the recess 83 extends in a sixth extreme plane p6 which is arranged slightly below the fifth extreme plane p5, i.e. between the fifth and third extreme planes p5 and p3.

With reference again to Fig. 3, the heat transfer plate 7a further comprises, on its front side 11, a HT front gasket groove 85. The HT front gasket groove 85 includes an annular field portion 85a enclosing the heat transfer area 45, the first and second distribution areas 49 and 53, the first and second support areas 57 and 59 and the first and second transfer holes 41 and 43. The HT front gasket groove 85 further includes ring portions 85b which are arranged outside the field portion 85a and each encloses a respective one of the first to eighth portholes 25, 33, 27, 35, 29, 37, 31 and 39.

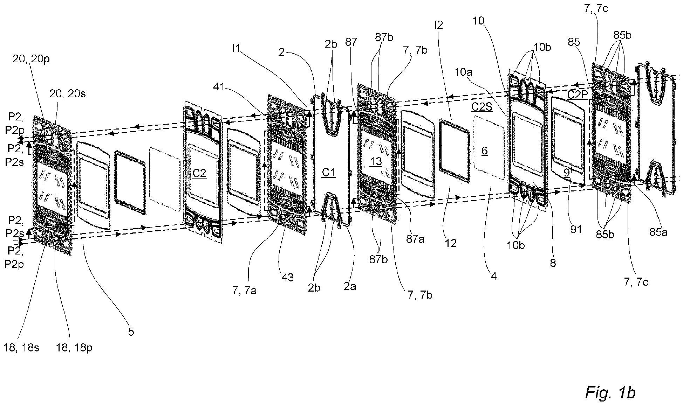

With reference to Fig. 1b, the heat transfer plate 7a further comprises, on its back side 13, a HT back gasket groove 87, which partly is aligned with the HT front gasket groove 85. In Fig. 3, a back of the HT back gasket groove 87 is visible. The HT back gasket groove 87 includes an annular field portion 87a enclosing (Fig. 3) the heat transfer area 45, part of the first and second distribution areas 49 and 53, the first and second support areas 57 and 59 and the first, second, seventh and eights port holes 25, 33, 31 and 39. The HT back gasket groove 87 further includes ring portions 87b (Fig. 3) which are arranged outside the field portion 87a and each encloses a respective one of the third, fourth, fifth and sixth portholes 27, 35, 29 and 37. Further, one of the ring portions 87b of the HT back gasket groove 87 also encloses the first transfer hole 41 while another one of the ring portions 87b of the HT back gasket groove 87 also encloses the second transfer hole 43.

Here (but not necessarily in alternative embodiments of the invention), a bottom of the HT front gasket groove 85, just like a bottom of the HT back gasket groove 87, extend halfway between the first and second extreme planes p1 and p2, i.e. in the central extension plane CHT (Fig. 4).

With reference to Figs. 2 and 7a, the electrode device 9a is formed of a sheet of stainless steel (could be other materials in other embodiments) of thickness t2 which here equals t1, i.e. t1=t2=t, and comprises a center portion 89, an electrode device gasket groove 91 on its front side 15 and an outer portion 93. The center portion 89, the electrode device gasket groove 91 and the outer portion 93 are integrally formed. The electrode device gasket groove 91 is annular and encloses the center portion 89. The outer portion 93 is annular and encloses the electrode device gasket groove 91. The center portion 89 is non-solid, here perforated (perforation not illustrated in the figures), while the complete electrode device gasket groove 91 and the complete outer portion 93 are solid. As seen in Fig. 7a, a peripheral annular outer edge 95 of the outer portion 93 of the electrode device 9a is bent towards the heat transfer plate 7a so as to form a "rim" with a "brim" extending all the way around the electrode device 9a.

With reference to Fig. 1a and 2, as expressed above, in the plate assembly 5a, the front side 11 of the heat transfer plate 7a abuts the back side 17 of the electrode device 9a. Arranged like this, the electrode device 9a covers an engagement portion 97 of the heat transfer plate 7a. The shape and size of the engagement portion 97 of the heat transfer plate 7a is defined by a periphery of the "brim" of the electrode device 9a. The engagement portion 97 is arranged between imaginary first and second straight lines L1 and L2 (Fig. 2) which extend perpendicular to the longitudinal center axis LHT of the heat transfer plate 7a. The first, third, fifth and seventh portholes 25, 27, 29 and 31 are arranged on one side, while the engagement portion 97 is arranged on the other side, of the imaginary first straight line L1. Similarly, the second, fourth, sixth and eighth portholes 33, 35, 37 and 39 are arranged on one side, while the engagement portion 97 is arranged on the other side, of the imaginary second straight line L2.

With reference to Figs. 2, 4, 6, 7a, 7b and 8 (which illustrates the electrode device 9a as see-through), when the electrode device 9a engages properly with the heat transfer plate 7a, the recess 83 of the heat transfer plate 7a receives the outer edge 95 of the electrode device 9a (Fig. 7a), and the field portion 85a of the HT front gasket groove 85 of the heat transfer plate 7a encircles the electrode device 9a (Fig. 2). Further, the tops 79 of the first support ridges 75 of the first support area 57 of the heat transfer plate 7a (Fig. 6) contact the outer portion 93 of the electrode device 9a on an inside of the outer edge 95 thereof (Fig. 7a). As illustrated in Fig. 2 in combination with Fig. 3 and Fig. 8, the solid outer portion 93 of the electrode device 9a covers the first and second primary distribution sub areas 49a and 53a and the first and second transfer holes 41 and 43 of the heat transfer plate 7a. The electrode device gasket groove 91 covers most of the first and second secondary distribution sub areas 49b and 53b and part of the heat transfer area 45, while the perforated center portion 89 covers the rest of the heat transfer area 45. As is clear from Fig. 7a, the outer portion 93 of the electrode device 9a has a thickness t on the inside of the outer edge 95. Since the tops 79 of the heat transfer plate 7a supporting the outer portion 93 of the electrode device 9a extend a distance t below tops of the ridges of the outer edge portion 61 of the heat transfer plate 7a, the front side 15 of the electrode device 9a will, within the outer portion 93 on the inside of the outer edge 95, extend flush with the tops of the ridges of the outer edge portion 61 of the heat transfer plate 7a, i.e. extend in the first extreme plane p1. Further, a bottom 99 of the electrode device gasket groove 91 extends in a seventh extreme plane p7 extending a distance t above the third extreme plane p3 (Fig. 7a). The electrode device 9a has a thickness t within the bottom 99 of the electrode device gasket groove 91. Therefore, the bottom 99 of the electrode device gasket groove 91 will abut the heat transfer plate 7a within the first and second secondary distribution sub areas 49b and 53b, outside the distribution recesses 67 and 69 (Figs. 4 and 8). Within the center portion 89, the electrode device 9a extends in an eighth extreme plane p8 which extends a distance t3 above the first extreme plane p1 (Fig. 7a). Thus, the fifth and eighth extreme planes p5 and p8 extend on opposite sides of the first extreme plane p1. In that the center portion 89 of the electrode device 9a projects beyond the first extreme plane p1, it may compensate for a space occupied by a rubber sheet 8 of a front gasket arrangement 4 (Fig. 1b) to be described below, which rubber sheet extends outside the center portion 89 in the apparatus 1 comprising the electrode device 9a and the front gasket arrangement.

As is clear from the figures, the heat transfer plate 7a and the electrode device 9a are designed to match each other. As illustrated in Fig. 3, the field portion 85a of the HT front gasket groove 85 of the heat transfer plate 7a has straight longitudinal sides extending parallel to the longitudinal center axis LHT of the heat transfer plate, and, as seen from a center of the heat transfer plate 7a, outwards bulging transverse sides connecting the longitudinal sides. Thus, also the first and second support areas 57, 59 of the heat transfer plate 7a have opposing straight longitudinal portions and opposing curved transverse portions. Further, as illustrated in Fig. 2, the electrode device 9a has opposing straight longitudinal outer edge portions and opposing curved transverse outer edge portions.

The above description of the plate assembly 5a, the heat transfer plate 7a and the electrode device 9a is applicable also to the other plate assemblies 5, heat transfer plates 7 and electrode devices 9 of the apparatus 1.

With reference again to Fig. 1a, in the apparatus 1, the stack 3 of plate assemblies 5 is arranged between two frame plates (not illustrated). Of course, the apparatus 1 may comprise one or more additional heat transfer plates which are not part of a plate assembly, for example adjacent the frame plates. The heat transfer plates 7 of the plate assemblies 5 can be seen as arranged in pairs, wherein heat transfer plates 7a and 7b form one of these pairs, while heat transfer plate 7c forms one of the heat transfer plates of another adjacent one of these pairs. The heat transfer plates of each pair form between them a first interspace I1. Further, a second interspace I2 is formed between each two adjacent pairs of heat transfer plates 7.

With reference also to Fig. 1b, a rubber back gasket 2 is arranged within each of the first interspaces I1 to define a first flow channel C1 therein. The back gasket 2, which will not be described in detail herein, comprises an annular field portion 2a and ring portions 2b arranged in the annular field portion 87a and the ring portions 87b, respectively, of the HT back gasket groove 87 of the heat transfer plates 7. A front gasket arrangement 4 is arranged within each of the second interspaces I2 to define a second flow channel C2 therein. The front gasket arrangement 4, which will not be described in detail herein, comprises a hydroxide ion permeable membrane 6, a rubber sheet 8 of thickness t3 with openings for passage of fluids and for exposure of the membrane 6, and rubber gaskets 10 and 12. The gasket 10 comprises an annular field portion 10a and ring portions 10b arranged in the annular field portion 85a and the ring portions 85b, respectively, of the HT front gasket groove 85 of the heat transfer plates 7. The gasket 12 is annular, arranged in the electrode device gasket groove 91 of the electrode devices 9 and configured to fix the membrane 6 to the rubber sheet 8. The front gasket arrangement 4 splits the corresponding second flow channel C2 in a second primary sub channel C2P and a second secondary sub channel C2S, which sub channels are parallel and extend on opposite sides of the front gasket arrangement 4.

When the apparatus 1 is ready for use, the plate assemblies 5 and the interposed back gaskets 2 and front gasket arrangements 4 are compressed, by some kind of tightening means, between the frame plates so as to tightly form the first and second flow channels C1 and C2 and also ports for conveying first and second fluids through the apparatus 1. Compressed like that, the heat transfer plates 7 of each of the pairs, such as the heat transfer plates 7a and 7b, abut each other in contact areas, while contact between adjacent pairs of heat transfer plates 7, such as the heat transfer plates 7b and 7c, is prevented by the presence of the front gasket arrangements 4 between the plate pairs. This separation or insulation between the plate pairs is necessary for the apparatus 1 to work properly for electrolysis. Typically, the front gasket arrangements 4 is fragile. In that the outer edge 95 (Fig. 7a) of the electrode devices 9, which outer edge 95 may be sharp, is bent away from the respective adjacent front gasket arrangement 4, the rubber sheet 8 thereof is less likely to be damaged by the electrode device 9.

With continued reference to Figs. 1a and 1b, the ports comprise first inlet port means 14 and first outlet port means 16 for the first fluid and second inlet port means 18 and second outlet port means 20 for the second fluid. In turn, the first inlet port means 14 comprises a first primary inlet port 14p and a first secondary inlet port 14s, the first outlet port means 16 comprises a first primary outlet port 16p and a first secondary outlet port 16s, the second inlet port means 18 comprises the second primary inlet port 18p and the second secondary inlet port 18s, and the second outlet port means 20 comprises the second primary outlet port 20p and the second secondary outlet port 20s. Here, the first fluid is a cooling fluid, for example deionized water, and the second fluid is an electrolyte, for example a mixture of water and an alkaline agent, such as potassium hydroxide.

With reference to Fig. 1a and the dashed lines, a first fluid path P1 for conveying the first fluid through the apparatus 1 comprises a first primary fluid path P1p and a first secondary fluid path P1s. The first primary fluid path P1p extends through the first primary inlet port 14p, through the first flow channels C1 and into the first primary outlet port 16p. The first secondary fluid path P1s extends through the first secondary inlet port 14s, through the first flow channels C1 and into the first secondary outlet port 16s.

With reference to Fig. 1b and the dashed lines, a second fluid path P2 for conveying the second fluid through the apparatus 1 comprises a second primary fluid path P2p and a second secondary fluid path P2s. The second primary fluid path P2p extends through the second primary inlet port 18p, into the first interspaces I1 outside the first flow channels C1, through the respective second transfer hole 43 of every second one of the heat transfer plates, i.e. plates 7a, 7c,..., into the second primary sub channels C2P, through the second primary sub channels C2P, through the respective first transfer hole 41 of every second one of the heat transfer plates, i.e. plates 7a, 7c..., into the first interspaces I1 outside the first flow channels C1, and into the second primary outlet port 20p. The second secondary fluid path P2s extends through the second secondary inlet port 18s, into the first interspaces I1 outside the first flow channels C1, through the respective second transfer hole 43 of every second one of the heat transfer plates, i.e. plates 7b,..., into the second secondary sub channels C2S, through the second secondary sub channels C2S, through the respective first transfer hole 41 of every second one of the heat transfer plates, i.e. plates 7b,..., into the first interspaces I1 outside the first flow channels C1 and into the second secondary outlet port 20s.

With reference also to Figs. 5, 7b and 8, when the second fluid passes the second transfer hole 43 of the heat transfer plates 7, it is fed towards the solid outer portion 93 of the adjacent one of the electrode devices 9. The outer portion 93 and the electrode device gasket groove 91 of the electrode device 9 together with the second distribution area 53 of the heat transfer plate 7 transversally spreads the second fluid to achieve an even second fluid distribution inside the corresponding plate assembly 5. More particularly, after the second fluid has passed the second transfer hole 43, it is transversally spread by being fed through the second primary distribution sub area 53a. When the second fluid approaches the second secondary distribution sub area 53b, it will be hindered by a restriction formed by a backside of the electrode device gasket groove 91 and a border of the second secondary distribution sub area 53b and, thus, further transversally spread. At the channels 69a' of the distribution recesses 69a, it will be easier for the second flow to enter the second secondary distribution sub area 53b. After the second fluid has entered the second secondary distribution sub area 53b, it is fed there though and further transversally spread. When the second fluid approaches the heat transfer area 45, it will be hindered by a restriction formed by a backside of the electrode device gasket groove 91 and another border of the second secondary distribution sub area 53b and, thus, further transversally spread. At the distribution recesses 69 it will be easier for the second fluid to enter heat transfer area 45.

When the second fluid, i.e. the electrolyte, is fed through the second flow channels C2, i.e. the second primary sub channels C2P and the second secondary sub channels C2S (Fig. 1b), as described above, more particularly across the heat transfer areas 45 of the adjacent heat transfer plates 7, water in the electrolyte is split into hydrogen and oxygen and a primary fraction is formed in the second primary sub channels C2P and a secondary fraction is formed in the second secondary sub channels C2S, one of the fractions containing more oxygen and less hydrogen than the other fraction. The primary fraction, just like the secondary fraction, is transversally collected by the electrode device gasket groove 91 and the solid outer portion 93 of the electrode device 9, together with the first distribution area 49 of the heat transfer plates 7, of the adjacent plate assemblies 5, in a way that is essentially reverse as compared to the above described (slightly different since the distribution recesses 67 of the first secondary distribution sub area 49b lacks channels corresponding to the channels 69a'). Thereafter, the primary and secondary fractions are fed through the first transfer holes 41 of the heat transfer plates 7 to be separately discharged from the apparatus 1 via outlets not illustrated.

When electrolysis is performed in the second flow channels C2, heat is generated. In that the first fluid, i.e. the deionized water, is fed through the first flow channels C1, i.e. on both sides of the electrolysis channels C2, the heat generated through the electrolysis is effectively and uniformly diverted from the apparatus 1.

It should be noted that the second fluid is referred to as second fluid even if its characteristics changes when it is fed through the apparatus, and that both the primary fraction and the secondary fraction of the second fluid are referred to as second fluid even if their separate compositions vary and differ from each other and from the original second fluid.

It should be stressed that all components necessary to make the apparatus work properly, such as power sources, connections, wiring, control units, valves, pumps, gaskets, plates, sensors, pipes, dosing equipment, etc., are not described herein or illustrated in the figures. Further, characteristics of the different components of the apparatus which are not relevant to the present invention are not described or illustrated herein.

The above described embodiment of the present invention should only be seen as an example. A person skilled in the art realizes that the embodiment discussed can be varied in a number of ways without deviating from the inventive conception.

In the above described embodiment, the electrode device has the shape of an integrally formed plate with parallel straight longitudinal outer edge portions and outwards bulging transverse outer edge portions, i.e. a plate with a "smooth" contour. In alternative embodiments, the electrode device could be configured differently. For example, it could be formed of separate components arranged to cooperate so as to form the electrode device. As a specific example, the center portion of the electrode device could be separately formed. Further, the outer portion and the gasket groove of the electrode device could be integrally formed in the shape of a "frame" arranged to receive the center portion. Additionally/alternatively, the electrode device could have other shapes and/or contours than described above. For example, instead of having a "smooth" contour, the electrode device could have a contour which, due to manufacturing or functional reasons which will not be discussed here, is locally recessed at one or more places.

In the above described embodiment, the outer portion of the electrode device is annular so as to completely surround the center portion of the electrode device. In alternative embodiments, the outer portion may be differently designed. As an example, it may be arranged to only partially surround the center portion. As a specific example, it may extend only on two opposite sides, e.g. the transverse sides, of the center portion.

In the above described embodiment, the electrode device has a smooth, i.e. a non-corrugated surface. In alternative embodiments, the electrode device could instead have an at least partly corrugated surface. As a specific example, the outer portion of the electrode plate could be corrugated at the back side due to manufacturing or functional reasons which will not be discussed here.

In the above described embodiment, the heat transfer plates are arranged to non-permanently engage with gaskets at the front side as well as the back side for sealing between the heat transfer plates and adjacent heat transfer plates in an apparatus. A heat transfer plate according to the invention could instead be arranged to be attached, with a permanent sealing, at the back side, to an adjacent heat transfer plate. On such a plate, a bottom of the back field gasket groove could extend in the second extreme plane, i.e. in so-called bottom plane.

In the above described embodiment, contact between adjacent pairs of heat transfer plates is prevented by the presence of the front gasket arrangements between the plate pairs, which front gasket arrangements comprises insulating sheets. In alternative embodiments, the insulating sheets, and possibly also other parts of the front gasket arrangements, could be omitted and the heat transfer plates could instead be suitably locally coated with insulating material to prevent contact between adjacent pairs of heat transfer plates.

The heat transfer plates may be pressed with other corrugation patterns than specified above. As an example, the heat transfer area of the heat transfer plate need not be pressed with a corrugation pattern of so-called herringbone type but could instead be pressed with a corrugation pattern comprising alternately arranged ridges and valleys extending essentially parallel to the longitudinal center axis of the heat transfer plate.

The electrode device may be fastened, possibly permanently, to the heat transfer plate by means of welding or other types of bonding, for example within the outer portion of the electrode device.

In the above described embodiment, the plate assemblies, and, thus, the heat transfer plates, are "turned" in relation to each other in the apparatus. In other embodiments, and with suitable design amendments to the heat transfer and electrode devices, the heat transfer plates could instead be "rotated" or "flipped" in relation to each other. In a stack with "rotated" heat transfer plates, the heat transfer plates are arranged back side to front side, and every second heat transfer plate is turned upside down in relation to the rest of the heat transfer plates. In a stack with "flipped" heat transfer plates, the heat transfer plates are arranged front side to front side, and every second heat transfer plate is turned upside down in relation to the rest of the heat transfer plates.

In the above described embodiment, the cooling fluid is fed into the apparatus at the top, and out of the apparatus at the bottom. In an alternative embodiment, the cooling fluid could instead be fed into the apparatus at the bottom, and out of the apparatus at the top.

The heat transfer plate may be comprised in an apparatus used for another type of electrolysis than alkaline water electrolysis, for example chlor-alkali electrolysis. Further, the heat transfer plate may be comprised in an apparatus for other applications than electrolysis, for example an apparatus in the form of a fuel cell.

It should be stressed that the attributes first, second, third, ..., primary, secondary, and a, b, c, ..., etc. are used herein just to distinguish between species and not to express any kind of mutual order between, or attribute any special characteristics to, the species.

It should be stressed that "receiving", "feeding", "communicating" etc., throughout the text, means "receiving directly or indirectly" and "feeding directly or indirectly" and "communicating directly or indirectly", respectively.

Further, it should be stressed that herein, when it is said that, for example, detail A extends "along" detail B, detail A may extend immediately at, or at a distance from, detail B, parallel or not to detail B.

Above, when it is specified that a component, such as a plate portion, extends in a certain way, such as in a certain plane, it is the center, in a thickness direction, of the component that extends in this way.

It should be stressed that a description of details not directly relevant to the present invention has been omitted and that the figures are just schematic and not drawn according to scale. It should also be said that some of the figures have been more simplified than others. Therefore, some components may be illustrated in one figure but left out on another figure.

## Claims

1. A plate assembly (5) including a heat transfer plate (7) which is corrugated, has opposing front and back sides (11, 13) and comprises a first end portion (19), an intermediate portion (21) and a second end portion (23) arranged in succession along a longitudinal center axis (LHT) of the heat transfer plate (7), the heat transfer plate (7) further comprising first, third and fifth portholes (25, 27, 29) arranged within the first end portion (19), second and fourth portholes (33, 35) arranged within the second end portion (23), and a heat transfer area (45), which is provided with a heat transfer corrugation pattern (47), arranged within the intermediate portion (21), **characterized in** further comprising an electrode device (9) having opposing front and back sides (15, 17), a non-solid center portion (89) and an outer portion (93) arranged outside the center portion (89) as seen from a center of the electrode device (9), more than half of the outer portion being solid, wherein the front side (11) of the heat transfer plate (7) abuts the back side (17) of the electrode device (9), the electrode device (9) covering an engagement portion (97) of the heat transfer plate (7), wherein the first, third and fifth portholes (25, 27, 29) are arranged on one side of an imaginary first straight line (L1) extending perpendicular to said longitudinal center axis (LHT) while the electrode device (9) is arranged on another side of said imaginary first straight line (L1), and wherein the second and fourth portholes (33, 35) are arranged on one side of an imaginary second straight line (L2) extending perpendicular to said longitudinal center axis (LHT) while the electrode device (9) is arranged on another side of said imaginary second straight line (L2).

2. A plate assembly (5) according to claim 1, wherein the outer portion (93) of the electrode device (9) at least partly encircles the center portion (89) of the electrode device (9).

3. A plate assembly (5) according to any of the preceding claims, wherein the outer portion (93) of the electrode device (9) is annular and surrounds the center portion (89) of the electrode device (9).

4. A plate assembly (5) according to any of the preceding claims, wherein the heat transfer plate (7) further comprises a HT front gasket groove (85) extending on the front side (11), an annular field portion (85a) of the HT front gasket groove (85) enclosing the heat transfer area (45), a first transfer hole (41) arranged within a first half (h1) of the heat transfer plate (7) comprising the first end portion (19), and a second transfer hole (43) arranged within a second half (h2) of the heat transfer plate (7) comprising the second end portion (23), wherein the first, second, third, fourth and fifth portholes (25, 33, 27, 35, 29) are arranged outside the field portion (85a) of the HT front gasket groove (85) and the electrode device (9) is arranged within the HT front gasket groove (85).

5. A plate assembly (5) according claim 4, wherein the electrode device (9) covers the first and second transfer holes (41, 43).

6. A plate assembly (5) according any of claims 4-5, wherein the outer portion (93) of the electrode device (9) covers the first and second transfer holes (41, 43).

7. A plate assembly (5) according to any of the preceding claims, wherein the electrode device (9) further comprises an electrode device gasket groove (91) extending on the front side (15).

8. A plate assembly (5) according to claim 7, wherein the electrode device gasket groove (91) of the electrode device (9) extends between the center portion (89) and the outer portion (93) of the electrode device (9).

9. A plate assembly (5) according to any of claims 7-8, wherein the electrode device gasket groove (91) is annular and surrounds the center portion (89) of the electrode device (9).

10. A plate assembly (5) according to any of the preceding claims wherein first and second extreme planes (p1, p2) extending parallel to a central extension plane (CHT) of the heat transfer plate (7) define an extension of the heat transfer plate (7), wherein fifth and fourth extreme planes (p5, p4) extending parallel to the central extension plane (CHT) of the heat transfer plate (7) define an extension of the heat transfer plate within the engagement portion (97), the fifth extreme plane (p5) extending between the first extreme plane (p1) and both the second and fourth extreme planes (p2, p4).

11. A plate assembly (5) according to any of the preceding claims, wherein an outer edge (95) of the electrode device (9), along at least part of its peripheral extension, is bent towards the heat transfer plate (7).

12. A plate assembly (5) according to claim 11, wherein the heat transfer plate (7) comprises a recess (83) for receiving said outer edge (95) of the electrode device (9).

13. A plate assembly (5) according to any of the preceding claims, wherein the heat transfer plate (7) further comprises a first distribution area (49) which is patterned differently than the heat transfer area (45), which first distribution area (49) is arranged between the first, third and fifth portholes (25, 27, 29) and the heat transfer area (45), wherein at least part of the first distribution area (49) is arranged within the engagement portion (97) of the heat transfer plate (7).

14. A plate assembly (5) according to claim 13, wherein the first distribution area (49) comprises a first primary distribution sub area (49a) and a first secondary distribution sub area (49b), wherein the first primary distribution sub area (49a) is patterned differently than the first secondary distribution sub area (49b), wherein the first secondary distribution sub area (49b) is arranged between, and borders on, the first primary distribution sub area (49a) and the heat transfer area (45).

15. A plate assembly (5) according to any of the preceding claims, wherein the heat transfer plate (7) further comprises a first support area (57) extending at least on two opposite sides of the heat transfer area (45), wherein the first support area (57) comprises first support ridges (75) comprising tops (79) supporting the electrode device (9).
